# EUROPEAN PATENT SPECIFICATION

(11) **EP 1 602 712 B1**
(45) Date of publication and mention of the grant of the patent: **03.01.2007**
(21) Application number: 05252519.3
(22) Date of filing: 22.04.2005
(51) Int. Cl.: C10M 163/00, C10M 141/10, F16H 3/00

(54) **Continuously variable transmission fluid**
Stufenlos verstellbares Getriebe
Transmission à variation continue

(30) Priority: 04.05.2004 US 838602
(43) Date of publication of application: 07.12.2005
(73) Proprietor: Infineum International Limited, Abingdon, Oxfordshire OX13 6BB (GB)
(72) Inventor: Ishkawa, Masahiro, Branchburg, New Jersey 08876 (US); Watts, Raymond F., Long Valley, New Jersey 07853 (US)
(74) Representative: Lewis, Pauline Therese

(56) References cited:
- EP-A- 0 805 194
- DE-A1- 19 820 994
- US-A- 4 832 867
- US-A1- 2001 034 305
- US-B1- 6 451 745

## Description

### FIELD OF THE INVENTION

This invention relates to a composition and a method for lubricating a steel belt or chain driven continuously variable transmission (CVT). More particularly, the present invention is directed to a lubricating composition containing a spiro bicyclodiphosphite useful as a continuously variable transmission fluid which exhibits enhanced steel-on-steel friction characteristics versus conventional fluids.

### BACKGROUND OF THE INVENTION

The continuing pursuit of more fuel efficient motor vehicles has led to the development of continuously variable transmissions by a number of manufacturers. The major difference between a continuously variable transmission and a conventional automatic transmission is that automatic transmissions use planetary gear sets to accomplish speed changes, whereas a continuously variable transmission uses pulleys and a belt, or chain, to change speed. A conventional automatic transmission normally has 3, 4 or 5 fixed reduction ratios or "speeds", e.g., a 5-speed automatic transmission. The operating system of the transmission selects the appropriate reduction ratio, or speed, based on engine rpm, ground speed and throttle position. In a continuously variable transmission an almost infinite number of reduction ratios, within fixed limits, can be achieved by changing the relative radius of travel of the driving belt, or chain, on the driving and driven pulleys.

The critical mechanism in the CVT is the variator. The variator is composed of two steel pulleys and a steel belt or chain. The pulleys can be opened and closed thereby allowing the belt, or chain, to travel at different radiuses. When the driving pulley is fully opened (small radius of belt travel) and the driven pulley is fully closed (large radius of belt travel) very high reduction ratios are achieved (yielding low ground speeds). Conversely, when the driving pulley is fully closed (large radius of belt travel) and the driven pulley is fully opened (small radius of belt travel) increases in output speed over input speed are achieved (yielding high ground speeds).

The novelty of this design is that the belt is made of steel. Two types of CVT transmissions exist. In one design, a steel belt is used and it is "pushed" or compressed to transmit power, and in the other power is transmitted by a steel link chain which is pulled, as is more common with a V-belt. Since in both designs power is transmitted by steel elements in contact with steel pulleys, the lubrication requirements are identical for both design types.

The most critical requirement for the lubricant used in CVT transmissions for the lubricant to provide high levels of steel-on-steel friction. Since steel-on-steel coefficients of friction of common lubricants tend to be very low if these lubricants were used, very high closing forces would need to be applied to the pulley sides to keep the belt from slipping. Any slippage of the belt causes catastrophic wear, which quickly leads to failure. The pulleys are made to exacting limits and have a precise surface finish to allow optimum operation. No wear of these surfaces can be allowed. Therefore, an appropriate lubricant must provide the highest possible coefficients of friction in the steel-on-steel interface.

Since the objective of using a CVT is to produce a vehicle with improved fuel efficiency, they are often fitted with a torque converter equipped with a slipping clutch system. The fuel efficiency gains possible with slipping torque converter clutches are well documented. Stick-slip behavior, when not prevented by the lubricant, manifests itself as vibration in the slipping torque converter clutch. Therefore these lubricants must still possess excellent paper on steel friction characteristics.

In order to successfully prevent stick-slip behavior in the slipping torque converter clutch it is essential that the lubricant have excellent control of friction at low sliding speeds. More specifically the lubricant must provide a non-stick-slip friction environment at low sliding speeds. This friction characteristic is determined by calculating the friction versus velocity relationship or dµ/dV [the change of friction coefficient (µ) with changing velocity (V)] of the system, where the system is defined as the lubricant and friction material being used. To successfully control stick slip behavior, this relationship, the dµ/dV, must always be positive, i.e. the friction coefficient must always increase with increasing sliding speed or velocity. Moreover, the more positive the dµ/dV the greater safety margin the lubricant provides against stick-slip behavior.

Prior attempts have been made to formulate a continuously variable transmission fluid which provides the appropriate amount of lubrication, while allowing sufficient friction between the belt and the pulleys to avoid slippage of the belt during transmission of high torque from the engine. One such lubricating fluid is disclosed in WO 98/39400, published September 11, 1998, which describes a lubricating composition comprising a mixture of: (1) a major amount of a lubricating oil; and (2) an effective amount of a performance enhancing additive combination comprising: (a) an ashless dispersant, (b) a metallic detergent, (c) an organic phosphite, (d) an amine salt of an organic phosphate, and (e) one or more friction modifiers, e.g., an amide friction modifier, a succinimide friction modifier and an ethoxylated amine friction modifier. See also US-A-5750477 (Sumiejski et al.). These lubricants however have not addressed the control of dµ/dV.

U.S. Patent 4,832,867 (1989) discloses the use of spiro bicyclic phosphites in lubricating oils but always requires their use in combination with an organomolybdenum compound. The fluids of this invention do not contain molybdenum. Compounds of molybdenum, such as molybdenum disulfide, molybdenum thiocarbamates and molybdenum carboxylates are all well known friction reducers. They are commonly used in gear applications and automotive crankcases to reduce steel-on-steel friction, thereby improving the energy efficiency of those devices. The objective of the present invention is to increase steel-on-steel friction and therefore complexes of molybdenum must be excluded from these compositions.

We have now found a unique combination of additives and friction modifiers that solve the difficult lubrication problems created by combination of the steel-on-steel pulley system and slipping torque converter clutch in a continuously variable transmission. In particular, the present inventors have discovered that the use of certain spiro bicyclodiphosphites can provide a continuously variable transmission (CVT) fluid which exhibits substantially improved steel-on-steel friction characteristics. When these CVT fluids also contain certain di-imide friction modifiers they are particularly well suited to CVT's containing slipping torque converter clutches.

### SUMMARY OF THE INVENTION

This invention relates to a composition and a method of lubricating a continuously variable transmission comprising:
(1) a major amount of a lubricating oil; and
(2) an effective amount of a performance enhancing additive combination comprising:
   (a) an ashless dispersant;
   (b) an effective amount of a spiro bicyclodiphosphite of structure I. 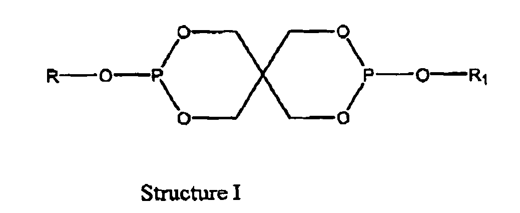 wherein R and R₁ may be the same or different aliphatic hydrocarbyl groups and are preferably alkyl or alkenyl groups having about 1 to 30 carbons, more preferably 4 to 16 carbons, and most preferably a C₁₀ alkyl group. The alkyl or alkenyl group may contain ring structures or hetero atoms.
   (c) a calcium lubricating oil detergent additive;
   (d) optionally, a succinimide friction modifier of Structure II; and 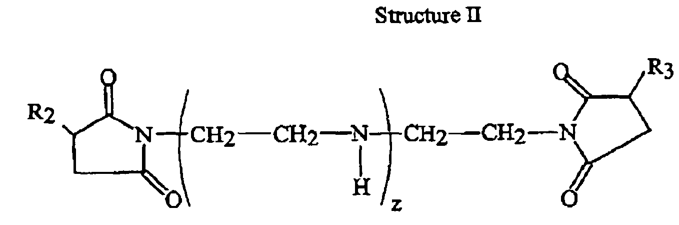 wherein R₂ and R₃ can be the same or different and are C₆ to C₃₀ alkyl, and z = 1 to 10.
   (e) optionally, an organic phosphite of Structure III. 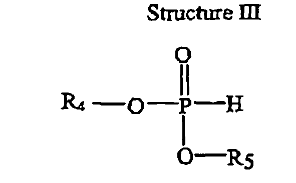
wherein R₄ is hydrocarbyl and R₅ is hydrocarbyl or hydrogen, with the proviso that the composition does not contain molybdenum.

A further embodiment of this invention is a continuously variable transmission apparatus containing the fluids of this invention.

### DETAILED DESCRIPTION OF THE INVENTION

Lubricating a CVT transmission equipped with a steel-on-steel friction variator and a slipping torque converter clutch system is not a simple matter. It presents a unique problem of providing high steel-on-steel friction for the variator and excellent paper-on-steel friction for the torque converter clutch. Developing high steel-on-steel friction for the variator can be accomplished through the use of the spiro bicyclodiphosphites and calcium detergents of the current invention. The spiro bicyclodiphosphites also improve the performance of fluids containing simple organic phosphites. Certain succinimide based friction modifiers are compatible with this system and confer excellent paper-on-steel friction characteristics to the products of the invention.

### 1. Lubricating Oils

Lubricating oils useful in this invention are derived from natural lubricating oils, synthetic lubricating oils, and mixtures thereof. In general, both the natural and synthetic lubricating oil will each have a Kinematic viscosity ranging from about 1 to about 100 mm²/s (cSt) at 100°C, although typical applications will require the lubricating oil or lubricating oil mixture to have a viscosity ranging from about 2 to about 8 mm²/s (cSt) at 100°C.

Natural lubricating oils include animal oils, vegetable oils (e.g., castor oil and lard oil), petroleum oils, mineral oils, and oils derived from coal or shale. The preferred natural lubricating oil is mineral oil.

Suitable mineral oils include all common mineral oil basestocks. This includes oils that are naphthenic or paraffinic in chemical structure. Oils that are refined by conventional methodology using acid, alkali, and clay or other agents such as aluminum chloride, or they may be extracted oils produced, for example, by solvent extraction with solvents such as phenol, sulfur dioxide, furfural, dichlorodiethyl ether, etc. They may be hydrotreated or hydrofined, dewaxed by chilling or catalytic dewaxing processes, or hydrocracked. The mineral oil may be produced from natural crude sources or be composed of isomerized wax materials or residues of other refining processes.

Typically the mineral oils will have Kinematic viscosities of from 2.0 mm²/s (cSt) to 8.0 mm²/s (cSt) at 100°C. The preferred mineral oils have Kinematic viscosities of from 2 to 6 mm²/s (cSt), and most preferred are those mineral oils with viscosities of 3 to 5 mm²/s (cSt) at 100°C.

Synthetic lubricating oils include hydrocarbon oils and halo-substituted hydrocarbon oils such as oligomerized, polymerized, and interpolymerized olefins [e.g., polybutylenes, polypropylenes, propylene, isobutylene copolymers, chlorinated polylactenes, poly(1-hexenes), poly(1-octenes), poly-(1-decenes), etc., and mixtures thereof]; alkylbenzenes [e.g., dodecyl-benzenes, tetradecylbenzenes, dinonylbenzenes, di(2-ethylhexyl)benzene, etc.]; polyphenyls [e.g., biphenyls, terphenyls, alkylated polyphenyls, etc.]; and alkylated diphenyl ethers, alkylated diphenyl sulfides, as well as their derivatives, analogs, and homologs thereof, and the like. The preferred oils from this class of synthetic oils are oligomers of α-olefins, particularly oligomers of 1-decene.

Synthetic lubricating oils also include alkylene oxide polymers, interpolymers, copolymers, and derivatives thereof where the terminal hydroxyl groups have been modified by esterification, etherification, etc. This class of synthetic oils is exemplified by: polyoxyalkylene polymers prepared by polymerization of ethylene oxide or propylene oxide; the alkyl and aryl ethers of these polyoxyalkylene polymers (e.g., methyl-polyisopropylene glycol ether having an average molecular weight of 1000, diphenyl ether of polypropylene glycol having a molecular weight of 1000 to 1500); and mono- and poly-carboxylic esters thereof (e.g., the acetic acid esters, mixed C₃-C₈ fatty acid esters, and C₁₂ oxo acid diester of tetraethylene glycol).

Another suitable class of synthetic lubricating oils comprises the esters of dicarboxylic acids (e.g., phthalic acid, succinic acid, alkyl succinic acids and alkenyl succinic acids, maleic acid, azelaic acid, suberic acid, sebasic acid, fumaric acid, adipic acid, linoleic acid dimer, malonic acid, alkylmalonic acids, alkenyl malonic acids, etc.) with a variety of alcohols (e.g., butyl alcohol, hexyl alcohol, dodecyl alcohol, 2-ethylhexyl alcohol, ethylene glycol, diethylene glycol monoethers, propylene glycol, etc.). Specific examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, and the complex ester formed by reacting one mole of sebasic acid with two moles of tetraethylene glycol and two moles of 2-ethyl-hexanoic acid, and the like. A preferred type of oil from this class of synthetic oils are adipates of C₄ to C₁₂ alcohols.

Esters useful as synthetic lubricating oils also include those made from C₅ to C₁₂ monocarboxylic acids and polyols and polyol ethers such as neopentyl glycol, trimethylolpropane pentaerythritol, dipentaerythritol, tripentaerythritol, and the like.

Silicon-based oils (such as the polyalkyl-, polyaryl-, polyalkoxy-, or polyaryloxy-siloxane oils and silicate oils) comprise another useful class of synthetic lubricating oils. These oils include tetraethyl silicate, tetraisopropyl silicate, tetra-(2-ethylhexyl) silicate, tetra-(4-methyl-2-ethylhexyl) silicate, tetra-(p-tert-butylphenyl) silicate, hexa-(4-methyl-2-pentoxy)-disiloxane, poly(methyl)-siloxanes and poly(methylphenyl) siloxanes, and the like. Other synthetic lubricating oils include liquid esters of phosphorus-containing acids (e.g., tricresyl phosphate, trioctyl phosphate, and diethyl ester of decylphosphonic acid), polymeric tetrahydrofurans, poly-α-olefins, and the like.

The lubricating oils may be derived from refined oils, re-refined oils, or mixtures thereof. Unrefined oils are obtained directly from a natural source or synthetic source (e.g., coal, shale, or tar sands bitumen) without further purification or treatment. Examples of unrefined oils include a shale oil obtained directly from a retorting operation, a petroleum oil obtained directly from distillation, or an ester oil obtained directly from an esterification process, each of which is then used without further treatment. Refined oils are similar to the unrefined oils except that refined oils have been treated in one or more purification steps to improve one or more properties. Suitable purification techniques include distillation, hydrotreating, dewaxing, solvent extraction, acid or base extraction, filtration, and percolation, all of which are known to those skilled in the art. Rerefined oils are obtained by treating used oils in processes similar to those used to obtain the refined oils. These rerefined oils are also known as reclaimed or reprocessed oils and are often additionally processed by techniques for removal of spent additives and oil breakdown products.

When the lubricating oil is a mixture of natural and synthetic lubricating oils (i.e., partially synthetic), the choice of the partial synthetic oil components may widely vary, however, particularly useful combinations are comprised of mineral oils and poly-α-olefins (PAO), particularly oligomers of 1-decene.

### 2. Additive Composition

### a. Ashless Dispersants

The lubricating oil is combined with an additive formulation. One component of the additive system of the current invention is an ashless dispersant. Suitable dispersants for use in this invention include hydrocarbyl succinimides, hydrocarbyl succinamides, mixed ester/amides of hydrocarbyl-substituted succinic acid, hydroxyesters of hydrocarbyl-substituted succinic acid, and Mannich condensation products of hydrocarbyl-substituted phenols, formaldehyde and polyamines. Also useful are condensation products of polyamines and hydrocarbyl substituted phenyl acids. Mixtures of these dispersants can also be used.

Basic nitrogen containing ashless dispersants are well known lubricating oil additives, and methods for their preparation are extensively described in the patent literature. For example, hydrocarbyl-substituted succinimides and succinamides and methods for their preparation are described, for example, in U.S. patent numbers; 3,018,247; 3,018,250; 3,018,291; 3,361,673 and 4,234,435. Mixed ester-amides of hydrocarbyl-substituted succinic acids are described, for example, in U.S. patents numbers: 3,576,743; 4,234,435 and 4,873,009. Mannich dispersants, which are condensation products of hydrocarbyl-substituted phenols, formaldehyde and polyamines are described, for example, in U.S. patents numbers: 3,368,972; 3,413,347; 3,539,633; 3,697,574; 3,725,277; 3,725,480; 3,726,882; 3,798,247; 3,803,039; 3,985,802; 4,231,759 and 4,142,980. Amine dispersants and methods for their production from high molecular weight aliphatic or alicyclic halides and amines are described, for example, in U.S. patent numbers: 3,275,554; 3,438,757; 3,454,55 and 3,565,804.

The preferred dispersants are the alkenyl succinimides and succinamides. The succinimide or succinamide dispersants can be formed from amines containing basic nitrogen and additionally one or more hydroxy groups. Usually, the amines are polyamines such as polyalkylene polyamines, hydroxy-substituted polyamines and polyoxyalkylene polyamines. Examples of polyalkylene polyamines include diethylene triamine, triethylene tetramine, tetraethylene pentamine, pentaethylene hexamine. Low cost poly(ethyleneamines) (PAM's) averaging about 5 to 7 nitrogen atoms per molecule are available commercially under trade names such as "Polyamine H", "Polyamine 400", Dow Polyamine E-100", etc. Hydroxy-substituted amines include N-hydroxyalkyl-alkylene polyamines such as N-(2-hydroxyethyl)ethylene diamine, N-(2-hydroxyethyl)piperazine, and N-hydroxyalkylated alkylene diamines of the type described in U.S. 4,873,009. Polyoxyalkylene polyamines typically include polyoxyethylene and polyoxypropylene diamines and triamines having average molecular weights in the range of 200 to 2500. Products of this type are available under the Jeffamine trademark.

The amine is readily reacted with the selected hydrocarbyl-substituted dicarboxylic acid material, e.g., alkylene succinic anhydride, by heating an oil solution containing 5 to 95 wt. % of said hydrocarbyl-substituted dicarboxylic acid material at about 100° to 250°C, preferably 125° to 175° C, generally for 1 to 10, e.g., 2 to 6 hours until the desired amount of water is removed. The heating is preferably carried out to favor formation of imides or mixtures of imides and amides, rather than amides and salts. Reaction ratios of hydrocarbyl-substituted dicarboxylic acid material to equivalents of amine as well as the other nucleophilic reactants described herein can vary considerably, depending on the reactants and type of bonds formed. Generally from 0.1 to 1.0, preferably from about 0.2 to 0.6, e.g., 0.4 to 0.6, equivalents of dicarboxylic acid unit content (e.g., substituted succinic anhydride content) is used per reactive equivalent of nucleophilic reactant, e.g., amine. For example, about 0.8 mole of a pentamine (having two primary amino groups and five reactive equivalents of nitrogen per molecule) is preferably used to convert into a mixture of amides and imides, a composition derived from reaction of polyolefin and maleic anhydride having a functionality of 1.6; i.e., preferably the pentamine is used in an amount sufficient to provide about 0.4 equivalents (that is, 1.6 divided by (0.8 x 5) equivalents) of succinic anhydride units per reactive nitrogen equivalent of the amine.

Use of alkenyl succinimides which have been treated with a boronating agent are also suitable for use in the compositions of this invention as they are much more compatible with elastomeric seals made from such substances as fluoro-elastomers and silicon-containing elastomers. Dispersants may be post-treated with many reagents known to those skilled in the art. (see, e.g., U.S. Pat. Nos. 3,254,025, 3,502,677 and 4,857,214).

The preferred ashless dispersants are polyisobutenyl succinimides formed from polyisobutenyl succinic anhydride and an alkylene polyamine such as triethylene tetramine or tetraethylene pentamine wherein the polyisobutenyl substituent is derived from polyisobutene having a number average molecular weight in the range of 700 to 1200 (preferably 900 to 1100). It has been found that selecting certain dispersants within the broad range of alkenyl succinimides produces fluids with improved frictional characteristics. The most preferred dispersants of this invention are those wherein the polyisobutene substituent group has a molecular weight of approximately 950 atomic mass units, the basic nitrogen containing moiety is polyamine (PAM) and the dispersant has been post treated with a boronating agent.

The ashless dispersants of the invention can be used in any effective amount. However, they are typically used from about 0.1 to 10.0 mass percent in the finished lubricant, preferably from about 0.5 to 7.0 percent and most preferably from about 2.0 to about 5.0 percent.

### b. Spiro Bicyclodiphosphites

The critical component for obtaining high steel on steel friction is a spiro bicyclodiphosphite of Structure I, wherein the R group is a C₁ to C₃₀ aliphatic hydrocarbyl, preferably an alkyl, C₁-C₃₀ meaning having 1 to 30 carbon atoms The alkyl group can be linear or branched, it can contain cyclic structures or hetero atoms such as N, S, O or halogen.

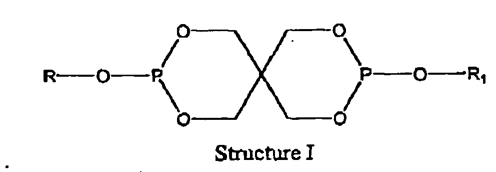

Bicyclophosphites of this type are made by the reaction of tetrahydroxy compounds, such as pentaerythritol, with organic phosphites, such as trimethyl phosphite. These products are available commercially and sold as Weston 600 Phosphite by GE Specialty Chemical Company or Doverphos 1220, by Dover Chemical Company.

The preferred spiro bicyclodiphosphites are the pentaerythritol diphosphites substituted with branched alkyl groups with from 3 to 18 carbon atoms. The most preferred are those wherein both alkyl groups are isodecyl (C 10).

The spiro bicyclodiphosphites can be used in any effective amount. However, they will normally be used at a concentration of from about 0.1 % to 10% by weight in the lubricating oil, preferably from 0.2 % to about 8% in the lubricating oil and most preferably at a concentration that delivers from 100 to 1000 parts per million (by weight) of phosphorus into the lubricating oil.

### c. Calcium Detergents

The calcium-containing detergents of the compositions of this invention are exemplified by oil-soluble neutral or overbased calcium salts of one or more of the following acidic substances (or mixtures thereof): (1) sulfonic acids, (2) carboxylic acids, (3) salicylic acids, (4) alkyl phenols and (5) sulfurized alkyl phenols.

Oil-soluble neutral metal-containing detergents are those detergents that contain stoichiometrically equivalent amounts of metal in relation to the amount of acidic moieties present in the detergent. Thus, in general the neutral detergents will have a low basicity when compared to their overbased counterparts. The acidic materials utilized in forming such detergents include carboxylic acids, salicylic acids, alkylphenols, sulfonic acids, sulfurized alkylphenols and the like.

The term "overbased" in connection with metallic detergents is used to designate metal salts wherein the metal is present in stoichiometrically larger amounts than the organic radical. The commonly employed methods for preparing the over-based salts involve heating a mineral oil solution of an acid with a stoichiometric excess of a metal neutralizing agent such as the metal oxide, hydroxide, carbonate, bicarbonate, of sulfide at a temperature of about 50°C, and filtering the resultant product. The use of a "promoter" in the neutralization step to aid the incorporation of a large excess of metal likewise is known. Examples of compounds useful as the promoter include phenolic substances such as phenol, naphthol, alkyl phenol, thiophenol, sulfurized alkylphenol, and condensation products of formaldehyde with a phenolic substance; alcohols such as methanol, 2-propanol, octanol, Cellosolve alcohol, Carbitol alcohol, ethylene glycol, stearyl alcohol, and cyclohexyl alcohol; and amines such as aniline, phenylene diamine, phenothiazine, phenyl-betanaphthylamine, and dodecylamine. A particularly effective method for preparing the basic salts comprises mixing an acid with an excess of a basic alkaline earth metal neutralizing agent and at least one alcohol promoter, and carbonating the mixture at an elevated temperature such as 60 to 200°C. Overbased detergents have a TBN (total base number, ASTM D-2896) typically of 150 or more such as 250-450.

Examples of suitable calcium-containing detergents include, but are not limited to, neutral and overbased salts of such substances as calcium phenates, sulfurized calcium phenates, wherein each aromatic group has one or more aliphatic groups to impart hydrocarbon solubility; calcium sulfonates, wherein each sulfonic acid moiety is attached to an aromatic nucleus which in turn usually contains one or more aliphatic substituents to impart hydrocarbon solubility; calcium salicylates wherein the aromatic moiety is usually substituted by one or more aliphatic substituents to impart hydrocarbon solubility, salts of hydrolyzed phosphosulfurized olefins having 10 to 2,000 carbon atoms or of hydrolyzed phosphosulfurized alcohols and/or aliphatic-substituted phenolic compounds having 10 to 2,000 carbon atoms; calcium salts of aliphatic carboxylic acids and aliphatic substituted cycloaliphatic carboxylic acids; and many other salts of oil-soluble organic acids. Mixtures of neutral or over-based salts of two or more different alkali and/or alkaline earth metals can be used. Likewise, neutral and/or overbased salts of mixtures of two or more different acids (e.g. one or more overbased calcium phenates with one or more overbased calcium sulfonates) can also be used.

As is well known, overbased metal detergents are generally regarded as containing overbasing quantities of inorganic bases, probably in the form of micro dispersions or colloidal suspensions. Thus the term "oil soluble" as applied to metallic detergents is intended to include metal detergents wherein inorganic bases are present that are not necessarily completely or truly oil-soluble in the strict sense of the term, inasmuch as such detergents when mixed into base oils behave much the same way as if they were fully and totally dissolved in the oil.

Methods for the production of oil-soluble neutral and overbased metallic detergents and alkaline earth metal-containing detergents are well known to those skilled in the art, and extensively reported in the patent literature. See for example, the disclosures of U.S. Pat. Nos. 2,001,108; 2,081,075; 2,095,538; 2,144,078; 2,163,622; 2,270,183; 2,292,205; 2,335,017; 2,399,877; 2,416,281; 2,451,345; 2,451,346; 2,485,861; 2,501,731; 2,501,732; 2,585,520; 2,671,758; 2,616,904; 2,616,905; 2,616,906; 2,616,911; 2,616,924; 2,616,925; 2,617,049; 2,695,910; 3,178,368; 3,367,867; 3,496,105; 3,629,109; 3,865,737; 3,907,691; 4,100,085; 4,129,589; 4,137,184; 4,184,740; 4,212,752; 4,617,135; 4,647,387; 4,880,550.

The metallic detergents utilized in this invention can, if desired, be oil-soluble boronated neutral and/or overbased alkali of alkaline earth metal-containing detergents. Methods for preparing boronated metallic detergents are described in, for example, U.S. Pat. Nos. 3,480,548; 3,679,584; 3,829,381; 3,909,691; 4,965,003; 4,965,004.

Preferred calcium detergents for use with this invention are overbased calcium sulfonates and phenates and overbased sulfurized calcium phenates.

While any effective amount of the calcium overbased detergent may be used to achieve the benefits of this invention, typically effective amounts will be from 0.01 to 5.0 mass percent in the finished fluid. Preferably the treat rate in the fluid will be from 0.05 to 3.0 mass percent, and most preferred is 0.1 to 1.0 mass percent.

### d. Succinimide based Friction Modifiers

An optional component of the current invention is a succinimide based friction modifier of structure II: 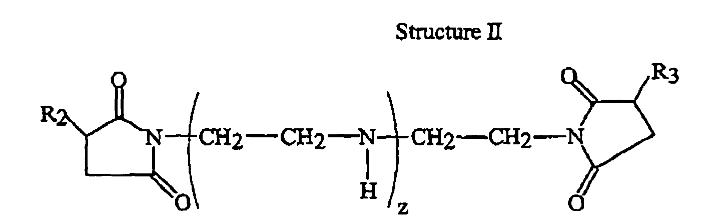 wherein R₂ and R₃ are the same or different and are C₆ to C₃₀ alkyl, and z = 1 to 10.

The alkenyl succinic anhydride starting materials for forming the friction modifiers of structure II can be either of two types. The two types differ in the linkage of the alkyl side chain to the succinic acid moiety. In the first type, the alkyl group is joined through a primary carbon atom in the starting olefin, and therefore the carbon atom adjacent to the succinic acid moiety is a secondary carbon atom. In the second type, the linkage is made through a secondary carbon atom in the starting olefin and these materials accordingly have a branched or isomerized side chain. The carbon atom adjacent to the succinic acid moiety therefore is necessarily a tertiary carbon atom.

The alkenyl succinic anhydrides of the first type, shown as structure IV, with linkages through secondary carbon atoms, are prepared simply by heating α-olefins, that is, terminally unsaturated olefins, with maleic anhydride. Examples of these materials would include n-decenyl succinic anhydride, tetradecenyl succinic anhydride, n-octadecenyl succinic anhydride, tetrapropenyl succinic anhydride, etc. 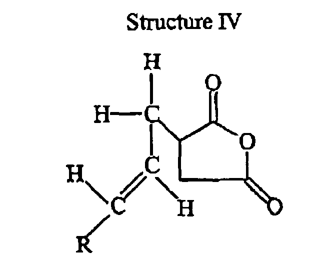 wherein R is C₃ to C₂₇ alkyl.

The second type of alkenyl succinic anhydrides, with linkage through tertiary carbon atoms, are produced from internally unsaturated olefins and maleic anhydride. Intemal olefins are olefins which are not terminally unsaturated, and therefore do not contain the 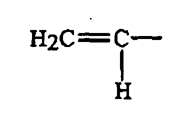 moiety. These internal olefins can be introduced into the reaction mixture as such, or they can be produced *in situ* by exposing α-olefins to isomerization catalysts at high temperatures. A process for producing such materials is described in U.S. Patent No. 3,382,172. The isomerized alkenyl substituted succinic anhydrides are compounds having structure V: 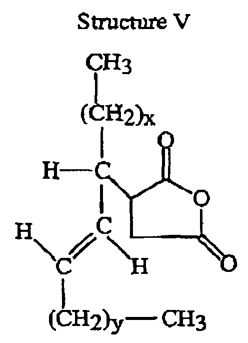 where x and y are independent integers whose sum is from 1 to 30.

The preferred succinic anhydrides are produced from isomerization of linear α-olefins with an acidic catalyst followed by reaction with maleic anhydride. The preferred α-olefins are 1-octene, 1-decene, 1-dodecene, 1-tetradecene, 1-hexadecene, 1-octadecene, 1-eicosane, or mixtures of these materials. The products described can also be produced from internal olefins of the same carbon numbers, 8 to 20. The preferred materials for this invention are those made from 1-tetradecene (x + y = 9), 1-hexadecene (x + y = 11) and 1-octadecene (x + y = 13), or mixtures thereof.

The alkenyl succinic anhydrides are then further reacted with polyamines having the following structure V: 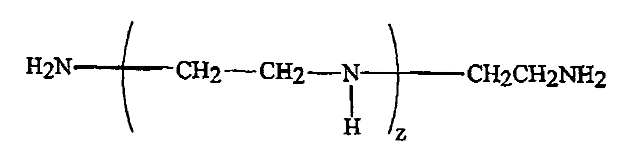 where z is an integer from 1 to 10, preferably from 1 to 3.

The preferred succinimide friction modifiers of this invention are products produced by reacting the isomerized alkenyl succinic anhydride with diethylene triamine, triethylene tetramine, tetraethylene pentamine or mixtures thereof. The most preferred products are prepared using tetraethylene pentamine. The alkenyl succinic anhydrides are typically reacted with the amines in a 2:1 molar ratio so that both primary amines are converted to succinimides. Sometimes a slight excess of isomerized alkenyl succinic anhydride is used to insure that all primary amines have reacted. The products of the reaction are compound of structure II.

The two types of succinimide friction modifiers can be used individually or in combination.

The disuccinimides of structure II may be post-treated or further processed by any number of techniques known in the art. These techniques would include, but are not limited to, boration, maleation, and acid treating with inorganic acids such as phosphoric acid, phosphorous acid, and sulfuric acid. Descriptions of these processes can be found in, for example, U.S. Patent No. 3,254,025; U.S. Patent No. 3,502,677; U.S. Patent No. 4,686,054; and U.S. Patent No. 4,857,214.

Another useful derivative of the succinimide modifiers are where the alkenyl groups of structures II, III and IV have been hydrogenated to form their saturated alkyl analogs. Saturation of the condensation products of olefins and maleic anhydride may be accomplished before or after reaction with the amine. These saturated versions of structures II, III and IV may likewise be post-treated as previously described.

While any effective amount of the compounds of structure II and its derivatives may be used to achieve the benefits of this invention, typically these effective amounts will range from 0.01 to 10 wt.% of the finished fluid, preferably from 0.05 to 7 wt.%, most preferably from 0.1 to 5 wt.%.

Examples of methods for producing compounds having structure II are given below.
Example FM-2-A - Into a one liter round bottomed flask fitted with a mechanical stirrer, nitrogen sweep, Dean Starke trap and condenser was placed 352 grams (1.00 mol) of isooctadecenylsuccinic anhydride (ODSA obtained from the Dixie Chemical Co.). A slow nitrogen sweep was begun, the stirrer started and the material heated to 130°C. Immediately, 87 grams (0.46 mol) of commercial tetraethylene pentamine was added slowly through a dip tube to the hot stirred isooctadecenylsuccinic anhydride. The temperature of the mixture increased to 150°C where it was held for two hours. During this heating period 8 mL of water (~50% of theoretical yield) was collected in the Dean Starke trap. The flask was cooled to yield the product and the product weighed and analyzed. Yield: 427 grams, Percent nitrogen: 7.2.
Example FM-2-B - The procedure of Example FM-2-A was repeated except that the following materials and amounts were used n-octadecenylsuccinic anhydride, 352 grams (1.0 mol) and tetraethylene pentamine, 87 grams (0.46 mol). The water recovered was 8 mL. Yield: 430 grams. Percent nitrogen: 7.1.
Example FM-2-C - The procedure of Example FM-2-A was repeated except that the following materials and amounts were used: isooctadecenylsuccinic anhydride, 458 grams (1.3 mol) and diethylenetriamine, 61.5 grams (0.6 mol). The water recovered was 11 mL. Yield: 505 grams. Percent nitrogen: 4.97.
Example FM-2-D - The procedure of Example FM-2-A was repeated except that the following materials and amounts were used; isohexadecenylsuccinic anhydride (ASA-100 obtained from the Dixie Chemical Co.), 324 grams (1.0 mol), and tetraethylenepentamine, 87 grams (0.46 mol). The water recovered was 9 mL. Yield: 398 grams. Percent nitrogen: 8.1.
Example FM-2-E - The product of Example FM-2-A, 925 grams (1.0 mol), and 140 grams of a naphthenic base oil (sold under the trademark Necton-37® and available from ExxonMobil Chemical Co.) and 1 gram of anti-foamant DC-200 sold by Dow Coming were placed in a 2 liter round bottomed flask fitted with a heating mantle, an overhead stirrer, a nitrogen sweep, a Dean Starke trap and a condenser. The solution was heated to 80°C and 62 grams (1.0 mol) of boric acid was added. The mixture was heated to 140°C and held at this temperature for 3 hours. During this heating period 3 mL of water was collected in the Dean Starke trap. The product was cooled, filtered, weighed, and analyzed. Yield: 1120 grams. Percent nitrogen: 6.1; percent boron: 0.9.

### e. Organic Phosphites

An optional component of the additive system of the current invention is an oil soluble organic phosphite. The organic phosphites useful in this invention preferably are the mono-, and di-hydrocarbyl phosphites having the general structure III, where structure III is represented by: 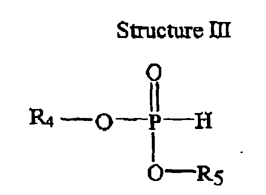 where R₄ is hydrocarbyl and R₅ is hydrocarbyl or hydrogen; preferably R₄ or R₅ contains a thioether (CH₂-S-CH₂) group. As used herein, the term "hydrocarbyl" denotes a group having a carbon atom directly attached to the remainder of the molecule and having predominantly hydrocarbon character within the context of this invention. Such groups include the following: (1) hydrocarbon groups; that is, aliphatic, alicyclic (e.g., cycloalkyl or cycloalkenyl), aromatic groups, alkaryl groups, and the like, as well as cyclic groups wherein the ring is completed through another portion of the molecule; (2) substituted hydrocarbon groups; that is, groups containing non-hydrocarbon substituents which in the context of this invention, do not alter the predominantly hydrocarbon nature of the group. Those skilled in the art will be aware of suitable substituents. Examples include, halo, hydroxy, nitro, cyano, alkoxy, acyl, etc.; (3) hetero groups; that is, groups which while predominantly hydrocarbon in character within the context of this invention, contain atoms of other than carbon in a chain or ring otherwise composed of carbon atoms. Suitable hetero atoms will be apparent to those skilled in the art and include, for example, nitrogen, oxygen and sulfur.

In structure III, when R₄ or R₅ is an alkyl, the alkyl groups are C₁ to C₂₀, preferably C₄ to C₂₀, more preferably C₆ to C₁₈, most preferably C₈ to C₁₆. Such groups are known to those skilled in the art. Examples include methyl, ethyl, octyl, decyl, octadecyl, cyclohexyl and phenyl, etc. R₄ or R₅ can also vary independently. As stated, R₄ and R₅ can be alkyl, or aralkyl, may be linear or branched, and the aryl groups may be phenyl or substituted phenyl. The R₄ and R₅ groups may be saturated or unsaturated, and they may contain hetero atoms such as S, N or O. The preferred materials are the dialkyl phosphites. The R₄ and R₅ groups are preferably linear alkyl groups from C₄ to C₁₈ containing one sulfur atom. The most preferred are decyl, undecyl, 3-thiaundecyl, pentadecyl and 3-thiapentadecyl.

Phosphites of structure III may be used individually or in mixtures.

The preferred embodiment of this invention is the use of the mixed alkyl phosphites described in U.S. Patent Nos. 5,185,090 and 5,242,612.

While any effective amount of the organic phosphite may be used to achieve the benefits of the invention, typically these effective amounts will be from 0.01 to 5.0 mass percent in the finished fluid. Preferably the treat rate in the fluid will be from 0.2% to 3.0% and most preferred is 0.3% to 1.0%.

Examples for producing representative mixed organic phosphites are given below.
Example P-1-A - An alkyl phosphite mixture was prepared by placing in a round bottom 4-neck flask equipped with a reflux condenser, a stirring bar and a nitrogen bubbler, 246 grams (1 mol) of hydroxyethyl-n-dodecyl sulfide, 122 grams (1 mol) of thiobisethanol, and 194 grams (1 mol) of dibutyl phosphite. The flask was flushed with nitrogen, sealed and the stirrer started. The contents were heated to 95°C under vacuum (-60 kPa). The reaction temperature was maintained at 95°C until approximately 59 mL of butyl alcohol were recovered as overhead in a chilled trap. Heating was continued until the TAN (Total Acid Number) of the reaction mixture reached about 110. This continued heating took approximately 3 hours, during which time no additional butyl alcohol was evolved. The reaction mixture was cooled and 102 grams of a base oil sold under the trademark Necton-37® and available from Exxon Company USA, was added. The final product was analyzed and found to contain 5.2% phosphorus and 11.0% sulfur.
Example P-1-B - A phosphorus- and sulfur-containing reaction product was prepared by placing in a round bottom 4-neck flask equipped with a reflux condenser, a stirring bar and a nitrogen bubbler, 194 grams (1 mole) of dibutyl hydrogen phosphite. The flask was flushed with nitrogen, sealed and the stirrer started. The dibutyl hydrogen phosphite was heated to 150°C under vacuum (-90 KPa). The temperature in the flask was maintained at 150°C while 190 grams (1 mole) of hydroxyethyl-n-octyl sulfide was added over about one hour. During the addition approximately 35 ml's of butyl alcohol were recovered as overhead in a chilled trap. Heating was continued for about one hour after the addition of the hydroxyethyl-n-octyl sulfide was completed, during which time no additional butyl alcohol was evolved. The reaction mixture was cooled and analyzed for phosphorus and sulfur. The final product had a TAN of 115 and contained 8.4 % phosphorus and 9.1 % sulfur.

Other additives known in the art may be added to the CVT fluids of this invention. These additives include other dispersants, antiwear agents, corrosion inhibitors, supplemental metal detergents, extreme pressure additives, antioxidants and the like, as disclose, for example, in "Lubricant Additives" by C.V. Smalheer and R. Kennedey Smith, 1967, at pages 1-11 and in U. S. Patent 4,105,571.

Representative amounts of additives in a CVT fluid are summarized as follows:

| Additive | Broad Wt. % | Preferred Wt. % |
|---|---|---|
| VI Improvers | 1-12 | 1 - 4 |
| Corrosion Inbibitor | 0.01 - 3 | 0.02 - 1 |
| Dispersants | 0.10-10 | 2 - 5 |
| Antifoaming Agents | 0.001 - 5 | 0.001 - 0.5 |
| Supplemental Metal Detergents | 0.01 - 6 | 0.01 - 3 |
| Antiwear Agents | 0.001 - 5 | 0.2 - 3 |
| Pour Point Depressants | 0.01 - 2 | 0.01 - 1.5 |
| Seal Swellants | 0.1 - 8 | 0.5 - 5 |
| Antioxidants | 0.001-3 | 0.1-1.0 |
| Lubricating Oil | Balance | Balance |

The additive combinations of this invention may be combined with other desired lubricating oil additives to form a concentrate. Typically the active ingredient (a.i.) level of the concentrate will range from 20 to 90 wt. % of the concentrate, preferably from 25 to 80 wt. %, most preferably from 35 to 75 wt. %. The balance of the concentrate is a diluent typically comprised of a lubricating oil or solvent.

The following examples are given as specific illustrations of the claimed invention. It should be understood, however, that the invention is not limited to the specific details set forth in the examples. All parts and percentages are by weight unless otherwise specified.

### EXAMPLES

Specific features and examples of the invention are presented for convenience only, and other embodiments according to the invention may be formulated that exhibit the benefits of the invention. These alternative embodiments will be recognized by those skilled in the art from the teachings of the specification and are intended to be embraced within the scope of the appended claims.

### EXAMPLES

To illustrate the effectiveness of the spiro bicyclodiphosphites at increasing steel-on-steel friction twelve test fluids were prepared and evaluated for their ability to increase steel-on-steel friction in a standard test. This test method utilizes a Falex Model 1 test apparatus fitted with an H60 test block and an S10 test rings. The block is loaded against the test ring by applying weights to the loading bale. For each evaluation the test cell was fitted with new parts and filled with 225 ml's of lubricant. Once the test parts and lubricant were in place the temperature of the lubricant was raised to 80°C and the rotation of the ring was started at a fixed speed of 545 rpm. A five pound weight was added to the bale and the rotation continued for 5 minutes, after which another 5 pound weight was added to the bale (total weight of 10 lbs.) Due to the multiplication effect of the bale lever this resulted in a weight of 100 pounds being applied to the block. After 10 minutes of sliding to break in the system, measurements were taken by running for three minutes at each of 6 speeds. The speed of rotation was decreased in steps with measurements of lateral force generated by the friction coefficient of the fluid taken at 545 (1.0), 273 (0.5), 136 (0.25), 68 (0.125), 55 (0.1) and 27 (0.05) rpm- The linear sliding velocity in meters per second is shown in parentheses after each rotational speed. From the lateral force measured the friction coefficient can be calculated. The table below shows the friction coefficient measured at 0.5 m/s (273 rpm), a sliding speed that correlates well with the relative sliding speed between the CVT belt and pulley in actual transmission operations- The data shown are the average of two separate measurements.

For the purposes of these examples twelve test lubricants were made up in a common Group II 100 neutral oil. The composition of the test lubricant base is shown below:

| Component | Mass Percent in Oil |
|---|---|
| Polyisobutenyl succinimide dispersant | 3.0 |
| Alkylate Diphenyl Amine | 0.25 |
| Product of Example FM-2-C | 1.0 |
| Calcium Sulfonate (300 TBN) | 0.3 |
| Polymethacrylate viscosity modifier | 5.0 |

Each of the phosphorus sources was then added to this base lubricant at the concentrations shown in the tables below and the friction coefficients of the resulting lubricant were measured by the method described above.

### Effect of the Phosphite

Four test lubricants were made up using di-isodecylpentaerythritol diphosphite ("Weston 600"), the product of Example P-1-B, zinc dialkyl dithiophosphate (ZDDP) and dibutyl hydrogen phosphite (DBHP). Each component was added to the test base to give a concentration of 300 ppm of phosphorus in the oil. The results of the friction coefficient measurements are shown in Table 1 below.

**Table 1**

| **Phosphorus source** | **ppm P** | **Friction Coefficient** |
|---|---|---|
| Weston 600 | 300 | 0.125 |
| Product of Example P-1-B | 300 | 0.120 |
| ZDDP | 300 | 0.120 |
| DBHP | 300 | 0.116 |

The data in Table 1 show that the fluid containing the bicyclo phosphite of the current invention yields the highest friction coefficient.

### Effect of Concentration

Three test lubricants were made up with varying concentrations of the diisodecyl pentaerythritol diphosphite ("Weston 600"). The compositions and measured friction coefficients of those lubricants are shown in Table 2 below.

**Table 2**

| **Phosphorus source** | **ppm P** | **Friction Coefficient** |
|---|---|---|
| Weston 600 | 100 | 0.119 |
| | 300 | 0.125 |
| | 500 | 0.126 |

The data in Table 2 shows that increasing the concentration of the spiro bicyclodiphosphites of the current invention in the lubricant results in increased friction coefficient.

### Effect of Mixtures

Six test lubricants were made up with mixtures of the phosphites of the current invention and the other phosphorus sources shown above. The compositions of those test lubricants and their measured friction coefficients are shown in Table 3 below.

**Table 3**

| **Phosphorus source** | **ppm Phosphorus** | | | | | |
|---|---|---|---|---|---|---|
| | **A** | **B** | **C** | **D** | **E** | **F** |
| Weston 600 | 200 | 200 | 200 | 250 | 250 | 250 |
| Product of Example P-1-B | 100 | | | 50 | | |
| ZDDP | | 100 | | | 50 | |
| DBHP | | | 100 | | | 50 |
| Friction Coefficient | 0.123 | 0.112 | 0.118 | 0.122 | 0.114 | 0.120 |

When the spiro bicyclodiphosphite of the current invention are mixed with other phosphites, i.e. the product of Example P-1-B, or dibutyl hydrogen phosphite, the friction coefficient of the resulting lubricant is higher than with the other phosphite alone. This is not true with the zinc dithiophosphate. Therefore mixtures of the spiro bicyclodiphosphites of the current invention with other phosphites are useful in increasing the steel-on-steel friction coefficients of lubricants.

## Claims

1. A lubricating composition for lubricating a continuously variable transmission, the lubricating composition comprising a mixture of:
(1) a major amount of a lubricating oil; and
(2) an additive combination comprising:
(a) an ashless dispersant;
(b) a spiro bicyclodiphosphite having the following structure: 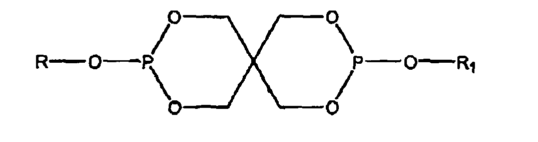 wherein R and R₁ can vary independently and are C₁-C₂₀ aliphatic hydrocarbyl groups;
(c) a calcium detergent lubricating oil additive;
(d) optionally, a succinimide friction modifier having the structure: 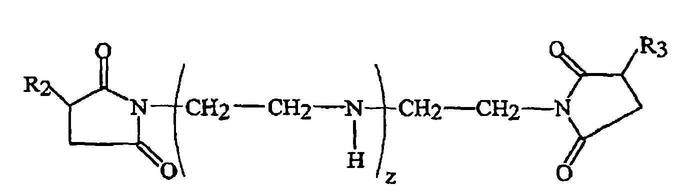 wherein R₂ and R₃ can vary independently and are C₆-C₃₀ alkyl, and z = 1 to 10, and
(e) optionally an organic phosphite having the following structure: 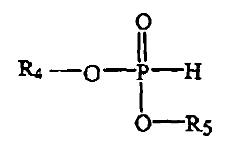 where R₄ is C₁-C₂₀ hydrocarbyl and R₅ is C₁-C₂₀ hydrocarbyl or hydrogen, with the proviso that the composition does not contain molybdenum.

2. The composition of claim 1 wherein the calcium detergent is an overbased sulfonate, phenate or sulfurized phenate.

3. The composition of claim 1 wherein the dispersant is a polyisobutenyl succinimide.

4. The composition of claim 1 wherein the R and R₁ groups of the spiro bicyclodiphosphite are isodecyl.

5. The composition of claim 1 wherein the (e) ingredient is present.

6. The composition of claim 5 wherein the R₄ and R₅ groups are linear alkyl having 4 to 18 carbon atoms containing one sulfur atom.

7. The composition of claim 1 wherein there is present 0.5 to 7.0 mass % of the dispersant.

8. The composition of claim 1 wherein there is present 0.2 to 8.0 mass % of the spiro bicyclodiphosphite.

9. The composition of claim 1 wherein there is present 0.05 to 3.0 mass % of the calcium detergent.

10. The composition of claim 1 further comprising an additive selected from the group consisting of viscosity modifiers, antioxidants, seal swellants, corrosion inhibitors, antifoaming agents, antiwear agents, supplemental metal detergents and pour point depressants.

11. A CVT apparatus containing the fluid of claims 1-10.

12. A method of lubricating a CVT apparatus comprising operating said apparatus using the fluid of claims 1-10.

## Patentansprüche

1. Schmierzusammensetzung zur Schmierung eines stufenlos verstellbaren Getriebes (CVT), wobei die Schmierzusammensetzung eine Mischung von
(1) einer größeren Menge Schmieröl und
(2) einer Additivkombination umfasst, die
(a) aschefreies Dispergiermittel,
(b) Spirobicyclodiphosphit mit der folgenden Struktur: 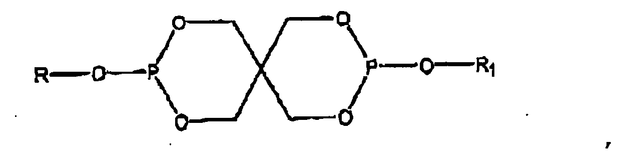 wobei R und R¹ unabhängig voneinander variieren können und aliphatische C₁- bis C₂₀-Kohlenwasserstoffgruppen sind,
(c) Calciumdetergens-Schmieröladditiv,
(d) optional Succinimid-Reibungsmodifizierungsmittel mit der Struktur 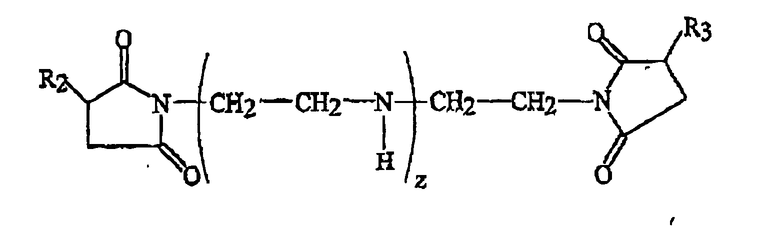 wobei R₂ und R₃ abhängig voneinander variieren können und C₆- bis C₃₀-Alkyl sind, und z = 1 bis 10, und
(e) optional organisches Phosphit mit der folgenden Sturktur 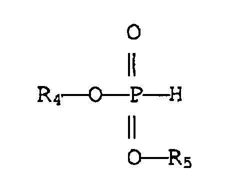 umfasst, wobei R₄ ein C₁- bis C₂₀-Kohlenwasserstoffrest und R₅ ein C₁- bis C₂₀-Kohlenwasserstoffrest oder Wasserstoff ist, mit der Maßgabe, dass die Zusammensetzung keine Molybdän enthält.

2. Zusammensetzung nach Anspruch 1, wobei das Calciumdetergens überbasisches Sulfonat, Phenolat oder sulfurisiertes Phenolat ist.

3. Zusammensetzung nach Anspruch 1, wobei das Dispergiermittel Polyisobutenylsuccinimid ist.

4. Zusammensetzung nach Anspruch 1, wobei die Gruppen R und R₁ des Spirobicyclodiphosphits Isodecyl sind.

5. Zusammensetzung nach Anspruch 1, wobei der Bestandteil (e) vorhanden ist.

6. Zusammensetzung nach Anspruch 5, wobei die Gruppen R₄ und R₅ lineares Alkyl mit 4 bis 18 Kohlenstoffatomen mit einem Schwefelatom sind.

7. Zusammensetzung nach Anspruch 1, wobei 0,5 bis 7,0 Massen-% des Dispergiermittels vorhanden sind.

8. Zusammensetzung nach Anspruch 1, wobei 0,2 bis 8,0 Massen-% des Spirobicyclodiphosphits vorhanden sind.

9. Zusammensetzung nach Anspruch 1, wobei 0,05 bis 3,0 Massen-% des Calciumdetergens vorhanden sind.

10. Zusammensetzung nach Anspruch 1, die ferner ein Additiv ausgewählt aus der Gruppe bestehend aus Viskositätsmodifizierungsmitteln, Antioxidanzien, Dichtungsquellmitteln, Korrosionsinhibitoren, Antischaummitteln, Antiverschleißmitteln, zusätzlichen Metalldetergenzien und Stockpunktsenkungsmitteln umfasst.

11. CVT-Vorrichtung, die die Flüssigkeit gemäß Ansprüchen 1-10 enthält.

12. Verfahren zum Schmieren einer CVT-Vorrichtung, bei dem die Vorrichtung unter Verwendung der Flüssigkeit der Ansprüche 1-10 betrieben wird.

## Revendications

1. Composition de lubrification pour lubrifier une transmission à variation continue, la composition de lubrification comprenant un mélange de :
(1) une quantité majeure d'une huile de lubrification ; et
(2) une combinaison d'additifs comprenant :
(a) un agent dispersant sans cendre ;
(b) un spiro-bicyclodiphosphite ayant la structure suivante : 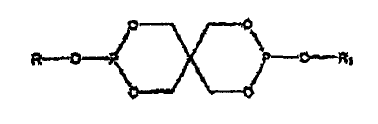 dans laquelle R et R₁ peuvent varier indépendamment et sont des groupes hydrocarbyle aliphatiques en C₁-C₂₀ ;
(c) un additif d'huile de lubrification de type détergent au calcium ;
(d) éventuellement, un agent de modification du frottement de type succinimide ayant la structure : 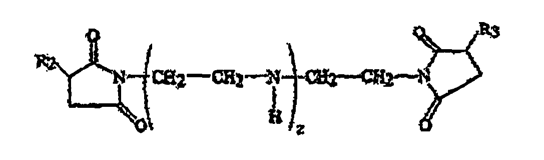 dans laquelle R₂ et R₃ peuvent varier indépendamment et sont alkyle en C₆-C₃₀, et z = 1 à 10, et
(e) éventuellement un phosphite organique ayant la structure suivante : 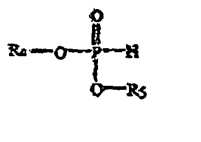 dans laquelle R₄ est un hydrocarbyle en C₁-C₂₀ et R₅ est un hydrocarbyle en C₁-C₂₀ ou un atome d'hydrogène, à condition que la composition ne contienne pas de molybdène.

2. composition selon la revendication 1, dans laquelle le détergent au calcium est un sulfonate surbasé, un phénate ou un phénate sulfuré.

3. Composition selon la revendication 1, dans laquelle l'agent dispersant est un polyisobuténylsuccinimide.

4. Composition selon la revendication 1, dans laquelle les groupes R et R₁ du spiro-bicyclodiphosphite sont isodécyle.

5. Composition selon la revendication 1, dans laquelle l'ingrédient (e) est présent.

6. Composition selon la revendication 5, dans laquelle les groupes R₄ et R₅ sont alkyle linéaire ayant de 4 à 18 atomes de carbone et contenant un atome de soufre.

7. Composition selon la revendication 1, dans laquelle est présent de 0,5 à 7,0 % en masse de l'agent dispersant.

8. Composition selon la revendication 1, dans laquelle est présent de 0,2 à 8,0 % en masse du spiro-bicyclodiphosphite.

9. Composition selon la revendication 1, dans laquelle est présent de 0,05 à 3,0 % en masse du détergent au calcium.

10. Composition selon la revendication 1, comprenant en outre un additif choisi dans le groupe constitué par les agents de modification de la viscosité, les antioxydants, les agents gonflants pour joints d'étanchéité, les inhibiteurs de corrosion, les agents antimousse, les agents antiusure, les détergents métalliques supplémentaires et les améliorants du point d'écoulement.

11. Appareil à TVC (Transmission à variation continue) contenant le fluide des revendications 1-10.

12. Procédé de lubrification d'un appareil à TVC, comprenant l'étape consistant à faire fonctionner ledit appareil au moyen du fluide des revendications 1-10.
